# EUROPEAN PATENT APPLICATION

(11) **EP 4 823 170 A1**
(43) Date of publication of application: **14.10.2026**
(21) Application number: 24910929.9
(22) Date of filing: 19.12.2024
(51) Int. Cl.: H04W 28/06

(54) **DATA COMPRESSION METHOD AND COMMUNICATION APPARATUS**

(30) Priority: 29.12.2023 CN 202311864757
(71) Applicant: Huawei Technologies Co., Ltd., Shenzhen, Guangdong 518129 (CN)
(72) Inventor: DU, Yuqing, Shenzhen, Guangdong 518129 (CN); MA, Mengyao, Shenzhen, Guangdong 518129 (CN); YAN, Min, Shenzhen, Guangdong 518129 (CN)
(74) Representative: Gill Jennings & Every LLP
(86) International application number: PCT/CN2024/140634
(87) International publication number: WO 2025/140000

(57) **Abstract**

This application provides a data compression method and a communication apparatus, to improve accuracy of a compression result, thereby improving a compression rate. The data compression method includes: A first device obtains to-be-compressed target data. The first device compresses the target data, to obtain compression result information of the target data and indication information of a compression mode of the target data, where the compression result information includes first compressed data of the target data, and the first compressed data corresponds to the compression mode. The first device sends first information, where the first information includes the compression result information of the target data and the indication information of the compression mode of the target data.

## Description

This application claims priority to Chinese Patent Application No. 202311864757.0, filed with the China National Intellectual Property Administration on December 29, 2023 and entitled "DATA COMPRESSION METHOD AND COMMUNICATION APPARATUS", which is incorporated herein by reference in its entirety.

### TECHNICAL FIELD

This application relates to the field of communication technologies, and in particular, to a data compression method and a communication apparatus.

### BACKGROUND

A next-generation wireless communication network involves a plurality of new scenarios and correspond to new transmission requirements. Therefore, a large amount of native radio access network (radio access network, RAN) data is derived, and interaction and transmission of the data occupy a large quantity of radio access network resources. A transmit end (for example, a terminal) may compress data that needs to be transmitted before transmission, to reduce a volume of the data to be transmitted. After receiving the data, a receive end (for example, a network device) may restore the data by using a method corresponding to that of compressing the data by the transmit end. In some implementations, compression may be performed based on a correlation between data. However, data correlations may vary greatly due to different scenarios or services. In some cases, data correlations are relatively poor. As a result, an effect of correlation-based data compression is not ideal.

### SUMMARY

Embodiments of this application provide a data compression method and a communication apparatus, to improve accuracy of a compression result and improve a compression rate.

To achieve the foregoing objectives, this application uses the following technical solutions.

According to a first aspect, a data compression method is provided. The data compression method includes: A first device obtains to-be-compressed target data. The first device compresses the target data, to obtain compression result information of the target data and indication information of a compression mode of the target data, where the compression result information includes first compressed data of the target data, and the first compressed data corresponds to the compression mode. The first device sends first information, where the first information includes the compression result information of the target data and the indication information of the compression mode of the target data.

According to the method provided in the first aspect, the first device may compress the target data and report the compression result information and the indication information of the compression mode of the target data, that is, the first information. The first compressed data in the compression result information corresponds to the indication information of the compression mode, in other words, the compression mode used to compress the target data matches the first compressed data. In this way, accuracy of a compression result can be improved, thereby improving a compression rate.

It should be understood that the first device in the first aspect may also be referred to as a sending device. Unless otherwise specified, the "first device" in this application may refer to the first device itself (for example, a network device or a terminal), or may refer to a component (for example, a processor, a chip, or a chip system) in the first device, or may be a logical module or software that can implement all or some functions of the first device.

In a possible implementation solution, the first compressed data may be a first difference, and the compression result information includes indication information of first data. The first data is data in a first data set corresponding to the target data, the first data set includes at least one piece of data, and the first difference is a difference between the target data and the first data. In other words, the target data is compressed based on the first data in the first data set. In this way, it can avoid using a prediction model for prediction, and calculation complexity is reduced, thereby improving operating efficiency of the first device.

In a possible implementation solution, the compression mode of the target data is determined based on a first condition. The first condition is determined based on the target data and predicted data, of the target data, that is obtained based on the prediction model. In other words, the compression mode of the target data may be determined based on the target data and the predicted data, of the target data, that is obtained based on the prediction model. In this way, the compression mode can be flexibly matched, thereby further improving accuracy of the first compressed data.

In a possible implementation solution, precision of the first compressed data is higher than precision of second compressed data. The second compressed data is determined based on the target data and the predicted data. In this way, a data volume of the first compressed data may be less than that of the second compressed data, thereby reducing resource overheads.

In a possible implementation solution, the compression mode of the target data is determined based on a range of a second difference. The second difference is a difference between the target data and the predicted data. In this way, the compression mode can be matched based on the range of the second difference, thereby further improving accuracy of the first compressed data.

In a possible implementation solution, the range of the second difference is determined based on a predicted difference threshold, and the predicted difference threshold is configured by a second device or agreed on in a protocol. In this way, the predicted difference threshold may be adjusted for different task requirements, so that prediction precision may be flexibly adjusted.

In a possible implementation solution, if the second difference is less than or equal to the predicted difference threshold corresponding to the target data, the compression result information is determined based on the predicted data, and the first compressed data is the second difference. If the second difference is greater than the predicted difference threshold, the compression result information is determined based on the first data. The first compressed data is the first difference, and the compression result information includes the indication information of the first data. The first data is the data in the first data set corresponding to the target data, the first data set includes the at least one piece of data, and the first difference is the difference between the target data and the first data. That is, the compression mode may be matched based on the second difference. In this way, accuracy of the compression result may be improved, thereby improving the compression rate.

In a possible implementation solution, the first data may be data that is in all data in the first data set and that is closest to the target data. In this way, a value of the first difference may be smaller, and a smaller amount of data may be occupied, thereby further improving a compression effect and reducing resource overheads.

In a possible implementation solution, the compression result information may further include the first data; or the compression result information may further include the first data and information that indicates that a second data set is updated. In this way, the first device can send the first data in time when the first data is updated.

In a possible implementation solution, the compression result information may further include indication information that indicates to update, based on the first data, a second data set corresponding to the target data.

In a possible implementation solution, the first data set is a data set obtained after second data in a second data set corresponding to the target data is replaced with the first data. The difference between the target data and the first data is less than or equal to the predicted difference threshold, and a difference between the target data and the second data is greater than the predicted difference threshold. That is, when the difference between the target data and the second data is greater than the predicted difference threshold, the first data set may be obtained by replacing the second data in the second data set with the first data. In other words, the data set may be updated based on the difference between the target data and the second data, so that the difference between the target data and the first data is smaller, thereby further improving accuracy of the compression result.

In a possible implementation solution, the second data may be data that is in the second data set and that is closest to the target data. In this way, the data set is updated based on the data that is in the data set and that is closest to the target data, so that the difference between the target data and the second data is smaller, thereby reducing frequency of updating the data set and reducing calculation complexity.

In a possible implementation solution, the first data may be determined by the first device based on the target data, or the first data may be determined by the first device based on the target data and the second data. In other words, the first data is correlated with the target data. In this way, the difference between the first data and the target data may be smaller, and accuracy of the compression result can be further improved.

In a possible implementation solution, the first data set may be one of candidate data sets respectively corresponding to a plurality of groups, and the candidate data set is used to predict to-be-compressed data. In other words, different groups may correspond to different candidate data sets. In this way, candidate data sets may be respectively set based on features of data corresponding to different groups, so that accuracy of the compression result can be further improved.

In a possible implementation solution, the method provided in the first aspect may further include: The first device receives second information. The second information indicates the plurality of groups and the candidate data sets respectively corresponding to the plurality of groups. In other words, another device may configure the plurality of groups and the candidate data sets respectively corresponding to the plurality of groups. In this way, processing complexity of the first device can be reduced, thereby improving operating efficiency.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located. In this case, the first device may determine a candidate data set, that is, the first data set, based on the target data, so that the first data set matches the target data, thereby further improving accuracy of the compression result of the target data.

In a possible implementation solution, the method provided in the first aspect may further include: The first device receives third information. The third information indicates the plurality of groups. In this way, the plurality of groups may be configured by another device, for example, the second device, to reduce operating complexity of the first device.

In a possible implementation solution, the method provided in the first aspect may further include: The first device sends fourth information. The fourth information indicates a candidate data set corresponding to each of the plurality of groups, and the candidate data set corresponding to each of the plurality of groups is determined by the first device based on the plurality of groups. For example, the first device may determine the candidate data set based on data that has been compressed. In this way, accuracy of the compression result can be further improved.

In a possible implementation solution, the third information further indicates that the plurality of groups are configured by the second device, and the candidate data sets respectively corresponding to the plurality of groups are determined by the first device.

In a possible implementation solution, the method provided in the first aspect may further include: The first device receives fifth information. The fifth information indicates that the plurality of groups are determined by the first device, and the candidate data sets respectively corresponding to the plurality of groups are determined by the first device. In this way, the first device may determine the candidate data set based on the data that has been compressed, thereby further improving accuracy of the compression result.

In a possible implementation solution, the first data set is determined by the first device, and the method provided in the first aspect may further include: The first device sends sixth information, where the sixth information indicates the first data set.

In a possible implementation solution, before the first device compresses the target data to obtain the compression result information of the target data and the indication information of the compression mode of the target data, the method provided in the first aspect may further include: The first device receives seventh information. The seventh information indicates the first data set.

According to a second aspect, a data decompression method is provided. The data decompression method includes: A second device receives first information. The first information includes compression result information of target data and indication information of a compression mode of the target data. The compression result information and the indication information of the compression mode of the target data are obtained by a first device by compressing the target data. The compression result information includes first compressed data of the target data, and the first compressed data corresponds to the compression mode. The second device restores the target data based on the first information.

According to the method provided in the second aspect, the second device may receive the first information, and restore the target data based on the first information. Because the first information includes the compression result information of the target data and the indication information of the compression mode of the target data, and the first compressed data corresponds to the compression mode, accuracy of a data compression result can be improved, so that restored target data is more accurate.

It should be understood that the second device in the second aspect may also be referred to as a receiving device. Unless otherwise specified, the "second device" in this application may refer to the second device itself (for example, a network device or a terminal), or may refer to a component (for example, a processor, a chip, or a chip system) in the second device, or may be a logical module or software that can implement all or some functions of the second device.

In a possible implementation solution, the first compressed data is a first difference, and the compression result information may include indication information of first data. The first data is data in a first data set corresponding to the target data, the first data set includes at least one piece of data, and the first difference is a difference between the target data and the first data.

In a possible implementation solution, the compression mode of the target data is determined based on a first condition. The first condition is determined based on the target data and predicted data, of the target data, that is obtained based on a prediction model.

In a possible implementation solution, precision of the first compressed data is higher than precision of second compressed data. The second compressed data is determined based on the target data and the predicted data.

In a possible implementation solution, the compression mode of the target data is determined based on a range of a second difference. The second difference is a difference between the target data and the predicted data.

In a possible implementation solution, the range of the second difference is determined based on a predicted difference threshold, and the predicted difference threshold is configured by the second device or agreed on in a protocol.

In a possible implementation solution, if the second difference is less than or equal to the predicted difference threshold corresponding to the target data, the compression result information is determined based on the predicted data, and the first compressed data is the second difference. If the second difference is greater than the predicted difference threshold, the compression result information is determined based on the first data. The first compressed data is the first difference, and the compression result information includes the indication information of the first data. The first data is the data in the first data set corresponding to the target data, the first data set includes the at least one piece of data, and the first difference is the difference between the target data and the first data.

In a possible implementation solution, the first data may be data that is in all data in the first data set and that is closest to the target data.

In a possible implementation solution, the compression result information further includes the first data; or the compression result information further includes the first data and information that indicates that a second data set is updated.

In a possible implementation solution, the compression result information may further include indication information that indicates to update, based on the first data, a second data set corresponding to the target data.

In a possible implementation solution, the first data set is a data set obtained after second data in a second data set corresponding to the target data is replaced with the first data. The difference between the target data and the first data is less than or equal to the predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

In a possible implementation solution, the first data set may be one of candidate data sets respectively corresponding to a plurality of groups, and the candidate data set is used to predict to-be-compressed data.

In a possible implementation solution, the method provided in the second aspect may further include: The second device sends second information. The second information indicates the plurality of groups and the candidate data sets respectively corresponding to the plurality of groups.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located.

In a possible implementation solution, the method provided in the second aspect may further include: The second device sends third information. The third information indicates the plurality of groups.

In a possible implementation solution, the method provided in the second aspect may further include: The second device receives fourth information. The fourth information indicates a candidate data set corresponding to each of the plurality of groups, and the candidate data set corresponding to each of the plurality of groups is determined by the first device based on the plurality of groups.

In a possible implementation solution, the third information further indicates that the plurality of groups are configured by the second device, and the candidate data sets respectively corresponding to the plurality of groups are configured by the first device.

In a possible implementation solution, the method provided in the second aspect may further include: The second device sends fifth information. The fifth information indicates that the plurality of groups are determined by the first device, and the candidate data sets respectively corresponding to the plurality of groups are determined by the first device.

In a possible implementation solution, the first data set is determined by the first device, and the method provided in the second aspect may further include: The second device receives sixth information, where the sixth information indicates the first data set.

In a possible implementation solution, before the second device receives the first information, the method provided in the second aspect may further include: The second device sends seventh information. The seventh information indicates the first data set.

In addition, for technical effects of the method according to the second aspect, refer to the technical effects of the method according to the first aspect. Details are not described herein again.

According to a third aspect, a data compression method is provided. The data compression method includes: A first device obtains to-be-compressed target data. The first device compresses the target data to obtain compression result information of the target data. The compression result information includes first compressed data and indication information of first data. The first data is data in a first data set corresponding to the target data, the first data set includes at least one piece of data, and the first compressed data is determined based on the target data and the first data. The first device sends first information. The first information includes the compression result information of the target data.

According to the data compression method provided in the third aspect, the first device compresses the obtained to-be-compressed target data, to obtain the compression result information of the target data. The compression result information includes the first compressed data and the indication information of the first data. In other words, the target data may be compressed based on the first data in the first data set. In this way, it can avoid using a prediction model for prediction, and calculation complexity can be reduced, thereby improving operating efficiency of the first device.

In a possible implementation solution, the first compressed data is a first difference, and the first difference is a difference between the target data and the first data.

In a possible implementation solution, the first data may be data that is in all data in the first data set and that is closest to the target data.

In a possible implementation solution, the compression result information may further include the first data, or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to a predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

In a possible implementation solution, the first data set may be one of candidate data sets respectively corresponding to a plurality of groups, and the candidate data set is used to predict to-be-compressed data.

In a possible implementation solution, the method provided in the third aspect may further include: The first device receives second information. The second information indicates the plurality of groups and the candidate data sets respectively corresponding to the plurality of groups.

In a possible implementation solution, the second information further indicates that the plurality of groups are configured by a second device, and the candidate data sets respectively corresponding to the plurality of groups are configured by the second device.

In a possible implementation solution, the first information may further include indication information that indicates a candidate data set corresponding to a group, in the plurality of groups, in which the target data is located.

In a possible implementation solution, the method provided in the third aspect may further include: The first device receives third information. The third information indicates the plurality of groups.

In a possible implementation solution, the method provided in the third aspect may further include: The first device sends fourth information. The fourth information indicates a candidate data set corresponding to each of the plurality of groups, and the candidate data set corresponding to each of the plurality of groups is determined by the first device based on the plurality of groups.

In a possible implementation solution, the third information further indicates that the plurality of groups are configured by the second device, and the candidate data sets respectively corresponding to the plurality of groups are determined by the first device.

In a possible implementation solution, the method provided in the third aspect may further include: The first device receives fifth information. The fifth information indicates that the plurality of groups are determined by the first device, and the candidate data sets respectively corresponding to the plurality of groups are determined by the first device.

In a possible implementation solution, the first data set is determined by the first device, and the method provided in the third aspect may further include: The first device sends sixth information, where the sixth information indicates the first data set.

In a possible implementation solution, before the first device compresses the target data to obtain the compression result information of the target data, the method provided in the third aspect may further include: The first device receives seventh information. The seventh information indicates the first data set.

For technical effects of the third aspect, refer to technical effects of corresponding features in the first aspect. Details are not described herein again.

According to a fourth aspect, a data decompression method is provided. The data decompression method includes: A second device receives first information. The first information includes compression result information of target data. The compression result information includes first compressed data and indication information of first data. The first data is data in a first data set corresponding to the target data, the first data set includes at least one piece of data, and the first compressed data is determined based on the target data and the first data. The second device restores the target data based on the first information.

According to the data compression method provided in the fourth aspect, the second device restores the target data based on the received first information, and the compression result information includes the first compressed data and the indication information of the first data. In other words, the target data may be restored based on the first compressed data and the first data in the first data set. In this way, it can avoid using a prediction model for prediction, and calculation complexity can be reduced, thereby improving operating efficiency of a first device.

In a possible implementation solution, the first compressed data is a first difference, and the first difference is a difference between the target data and the first data.

In a possible implementation solution, the first data may be data that is in all data in the first data set and that is closest to the target data.

In a possible implementation solution, the compression result information may further include the first data, or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to a predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

In a possible implementation solution, the first data set may be one of candidate data sets respectively corresponding to a plurality of groups, and the candidate data set is used to predict to-be-compressed data.

In a possible implementation solution, the method provided in the fourth aspect may further include: The second device sends second information. The second information indicates the plurality of groups and the candidate data sets respectively corresponding to the plurality of groups.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located.

In a possible implementation solution, the method provided in the fourth aspect may further include: The second device sends third information. The third information indicates the plurality of groups.

In a possible implementation solution, the method provided in the fourth aspect may further include: The second device receives fourth information. The fourth information indicates a candidate data set corresponding to each of the plurality of groups, and the candidate data set corresponding to each of the plurality of groups is determined by the first device based on the plurality of groups.

In a possible implementation solution, the third information further indicates that the plurality of groups are configured by the second device, and the candidate data sets respectively corresponding to the plurality of groups are determined by the first device.

In a possible implementation solution, the method provided in the fourth aspect may further include: The second device sends fifth information. The fifth information indicates that the plurality of groups are determined by the first device, and the candidate data sets respectively corresponding to the plurality of groups are determined by the first device.

In a possible implementation solution, the first data set is determined by the first device, and the method provided in the fourth aspect may further include: The second device receives sixth information, where the sixth information indicates the first data set.

In a possible implementation solution, before the first device compresses the target data to obtain the compression result information of the target data, the method provided in the fourth aspect may further include: The second device sends seventh information. The seventh information indicates the first data set.

In addition, for technical effects of the method according to the fourth aspect, refer to the technical effects of the method according to the third aspect. Details are not described herein again.

According to a fifth aspect, a communication apparatus is provided. The communication apparatus is configured to perform the method according to any one of the implementations of the first aspect to the fourth aspect.

In this application, the communication apparatus according to the fifth aspect may be a terminal or a network device, a chip (system) or another part or component that may be disposed in a terminal or a network device, or an apparatus including a terminal or a network device.

It should be understood that the communication apparatus according to the fifth aspect includes a corresponding module, unit, or means (means) for implementing the method according to any one of the first aspect to the fourth aspect. The module, unit, or means may be implemented through hardware, software, or hardware executing corresponding software. The hardware or the software includes one or more modules or units configured to execute functions in the foregoing methods.

According to a sixth aspect, a communication apparatus is provided. The communication apparatus includes a processor. The processor is configured to perform the method according to any one of the possible implementations of the first aspect to the fourth aspect.

In a possible implementation solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible implementation solution, the communication apparatus according to the sixth aspect may further include a memory. The memory and the processor may be integrated together, or may be disposed separately. The memory may be configured to store a computer program and/or data in the method according to any one of the first aspect to the fourth aspect.

In this application, the communication apparatus according to the sixth aspect may be a terminal or a network device, a chip (system) or another part or component that may be disposed in a terminal or a network device, or an apparatus including a terminal or a network device.

According to a seventh aspect, a communication apparatus is provided. The communication apparatus includes a processor. The processor is coupled to a memory, and the processor is configured to execute a computer program stored in the memory, so that the communication apparatus performs the method according to any one of the possible implementations of the first aspect to the fourth aspect.

In a possible implementation solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a terminal or a network device, a chip (system) or another part or component that may be disposed in a terminal or a network device, or an apparatus including a terminal or a network device.

According to an eighth aspect, a communication apparatus is provided, which includes a processor and a memory. The memory is configured to store a computer program. When the processor executes the computer program, the communication apparatus is enabled to perform the method according to any one of the implementations of the first aspect to the fourth aspect.

In a possible implementation solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a terminal or a network device, a chip (system) or another part or component that may be disposed in a terminal or a network device, or an apparatus including a terminal or a network device.

According to a ninth aspect, a communication apparatus is provided, which includes a processor. The processor is configured to: be coupled to a memory; and after reading a computer program in the memory, perform, based on the computer program, the method in any one of the implementations of the first aspect to the fourth aspect.

In a possible implementation solution, the communication apparatus according to the ninth aspect may further include a transceiver. The transceiver may be a transceiver circuit or an interface circuit. The transceiver may be used by the communication apparatus according to the ninth aspect to communicate with another communication apparatus.

In this application, the communication apparatus according to the ninth aspect may be a terminal or a network device, a chip (system) or another part or component that may be disposed in a terminal or a network device, or an apparatus including a terminal or a network device.

According to a tenth aspect, a processor is provided. The processor is configured to perform the method according to any one of the possible implementations of the first aspect to the fourth aspect.

According to an eleventh aspect, a communication system is provided. The communication system includes one or more terminals and one or more network devices.

According to a twelfth aspect, a computer-readable storage medium is provided, which includes a computer program or instructions. When the computer program or the instructions are run on a computer, the computer is enabled to perform the method according to any one of the possible implementations of the first aspect to the fourth aspect.

According to a thirteenth aspect, a computer program product is provided, which includes a computer program or instructions. When the computer program or the instructions are run on a computer, the computer is enabled to perform the method according to any one of the possible implementations of the first aspect to the fourth aspect.

In addition, for technical effects of the communication apparatus according to the fifth aspect to the thirteenth aspect, refer to technical effects of the method according to the first aspect to the fourth aspect. Details are not described herein again.

### BRIEF DESCRIPTION OF DRAWINGS

FIG. 1 is a diagram of an architecture of a communication system according to an embodiment of this application;
FIG. 2 is a diagram of a relationship between data according to an embodiment of this application;
FIG. 3 is a schematic flowchart 1 of a method according to an embodiment of this application;
FIG. 4A to FIG. 4E are a diagram of a relationship between data and a compression mode according to an embodiment of this application;
FIG. 5 is a schematic flowchart 1 of compressing target data by a first device;
FIG. 6 is a schematic flowchart 2 of compressing target data by a first device;
FIG. 7 is a diagram of a structure of first information according to an embodiment of this application;
FIG. 8A and FIG. 8B are a diagram of groups according to an embodiment of this application;
FIG. 9 is a schematic flowchart 2 of a method according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an Internet of vehicles communication system, a 4th generation (4th generation, 4G) mobile communication system such as a long term evolution (long term evolution, LTE) system and a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. "Of (of)", "relevant (relevant)", and "corresponding (corresponding)" may be interchangeably used sometimes. It should be noted that meanings expressed by the terms are consistent when differences of the terms are not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With evolution of the network architecture and emergence of new service scenarios, the technical solutions provided in embodiments of this application are also applicable to similar technical problems.

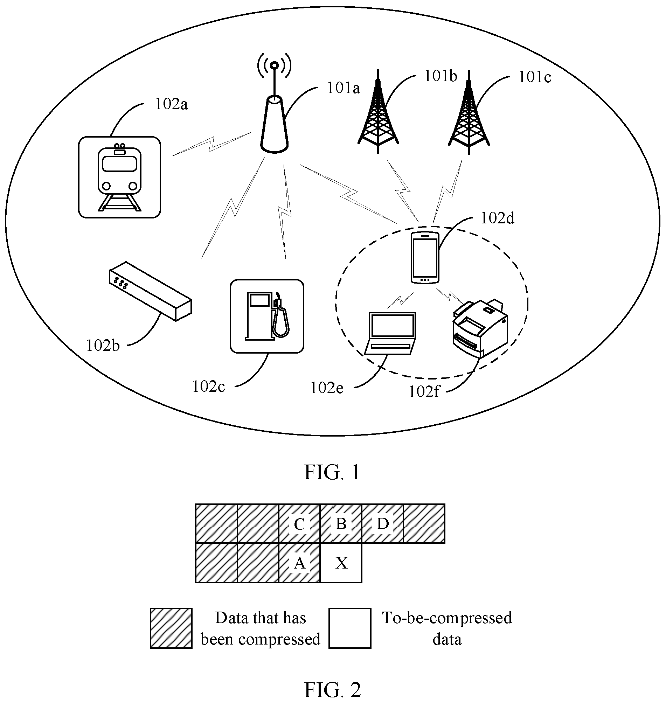

For ease of understanding embodiments of this application, a communication system shown in FIG. 1 is first used as an example to describe a communication system applicable to embodiments of this application in detail. For example, FIG. 1 is a diagram of an architecture of a communication system to which a method according to embodiments of this application is applicable.

As shown in FIG. 1, the communication system includes at least one network device (for example, a network device 101a to a network device 101c) and at least one terminal (for example, a terminal 102a to a terminal 102f).

The network device (the network device 101a to the network device 101c) and the terminal (the terminal 102a to the terminal 102f) may exchange information with each other. When there are a plurality of terminals, any two terminals may also exchange information with each other. Alternatively, when there are a plurality of network devices, any two network devices may also exchange information with each other.

The terminal may be a terminal having receiving and sending functions, or may be a chip or a chip system disposed in the terminal. The terminal may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smartphone (smartphone), a tablet computer (Pad), a wireless data card, a personal digital assistant (personal digital assistant, PDA) computer, a wireless modem (modem), a handheld device (handset), a laptop computer (laptop computer), a machine-type communication (machine-type communication, MTC) terminal, a computer having a wireless sending and receiving function, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in self driving, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) or the like having a terminal function, a flight device (for example, a smart robot, a hot air balloon, an uncrewed aerial vehicle, or an airplane), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The terminal may alternatively be another device having a terminal function. For example, the terminal may be a device that executes a terminal function in D2D communication. A device form of the terminal is not limited in embodiments of this application. An apparatus for implementing a function of the terminal may be the terminal; or the terminal may be an apparatus, for example, a chip system, that can support the terminal in implementing the function. The apparatus may be installed in the terminal or used in cooperation with the terminal. In this embodiment of this application, the chip system may include a chip, or may include a chip and another discrete component.

The network device may be a device having a wireless transceiver function, or may be a chip or a chip system disposed in the device; and is located in an access network (access network, AN) of the communication system, to provide an access service for a terminal. For example, the network device may be referred to as a radio access network (radio access network, RAN) device, and may be specifically an access network device in a next-generation mobile communication system, for example, a 6G mobile communication system. For example, the network device may be a 6G base station. Alternatively, in the next-generation mobile communication system, the network device may be named in another manner, which falls within the protection scope of embodiments of this application. This is not limited in this application. Alternatively, the network device may include a gNB in 5G such as a new radio (new radio, NR) system, may include one antenna panel or a group of antenna panels (including a plurality of antenna panels) of a base station in 5G, or may be a network node that forms a gNB, a transmission point (a transmission and reception point, TRP, or a transmission point, TP), or a transmission measurement function (transmission measurement function, TMF). For example, the network device may be a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP), a wireless relay node, a wireless backhaul node, macro base stations in various forms, a micro base station (also referred to as a small cell), a relay station, an access point, a wearable device, a vehicle-mounted device, and the like in a wireless fidelity (wireless fidelity, Wi-Fi) system.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in the access network RAN, or the CU may be classified as a network device in a core network CN. This is not limited herein. In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented through a software module, a hardware module, or a combination of a software module and a hardware module.

In embodiments of this application, a form of the network device is not limited. An apparatus for implementing a function of the network device may be a network device; or the network device may be an apparatus, for example, a chip system, that can support the network device in implementing the function. The apparatus may be installed in the network device or used in cooperation with the network device.

It should be noted that the method provided in embodiments of this application is applicable to communication between any two nodes shown in FIG. 1, for example, between terminal devices, between network devices, and between the terminal device and the network device. For a specific implementation, refer to the following method embodiments. Details are not described herein again.

It should be noted that the solutions in embodiments of this application may also be applied to another communication system, and a corresponding name may also be replaced with a name of a corresponding function in the another communication system.

It should be understood that FIG. 1 is merely a simplified diagram used as an example for ease of understanding. The communication system may further include another network device and/or another terminal that are/is not drawn in FIG. 1.

In a communication scenario, a device at a transmit end, for example, a terminal, may compress data that needs to be transmitted before transmission, to reduce a volume of the data to be transmitted. After receiving the data, a receive end, for example, a network device, may restore the data by using a method corresponding to that of compressing data by the transmit end. In some embodiments, compression may be performed based on a correlation between data. For example, the transmit end may predict one piece of data based on the correlation between data and data that has been transmitted, compress target data based on the target data and the predicted data, and send a compression result to the receive end. Correspondingly, the receive end may receive the compression result, predict one piece of data based on the correlation between data and data that has been restored, and restore the target data based on the predicted data and the compression result. Generally, the transmit end and the receive end use a unified prediction method or model (for example, methods used to predict data are the same), to obtain a same or basically same prediction result.

For ease of understanding, the following describes a method for predicting data by the transmit end and the receive end with reference to FIG. 2. As shown in FIG. 2, it is assumed that data A, B, C, and D are all reconstructed data corresponding to data that has been compressed by the transmit end, compression results corresponding to the data A to the data D are all transmitted to the receive end, and to-be-compressed data is X. In this case, the transmit end may perform prediction based on a prediction model, to obtain predicted data of the data X. For example, the prediction model may be a LOCO-I model, and a prediction principle of the prediction model is as follows: (1) If *C* ≥ max(*A*, *B*), in other words, a value of C is greater than or equal to the larger one of *A* and *B*, predicted data of *X* is the smaller one of *A* and *B*, that is, *X̂* = *min*(*A*, *B*). (2) If *C* ≤ *min*(*A*, *B*), in other words, the value of *C* is less than or equal to the smaller one of *A* and *B*, the predicted data of *X* is the larger one of *A* and *B*, that is, *X̂* = *max*(*A*, *B*). (3) If both (1) and (2) are not met, the predicted data of *X* is *A* + *B* - *C*, that is, *X̂* = *A* + *B* - *C*.

For another example, the prediction model may be an autoregressive model. To be specific, if a sequence [*X*₁,*X*₂,··· ,*X*_{*n*-1}, *X*] including a plurality of pieces of data is given, where [*X*₁, *X*₂, ··· , *X*_{*n-*1}] is reconstructed data corresponding to data that has been compressed by the transmit end, predicted data of target data is linear weighting of the reconstructed data corresponding to the data that has been compressed by the transmit end, that is, $\hat{X} = {\sum }_{i = 1}^{n - 1} {φ}_{i} {X}_{n - 1} + ε$ , where *φᵢ* is a weighting coefficient, and *ε is noise*.

It should be understood that another existing model may be used for implementation, and details are not described herein again. Reconstructed data corresponding to one piece of data refers to the data itself, that is, original data; or data obtained after the data is processed. Similarly, the receive end may perform prediction by using a model similar to that of the transmit end, to obtain the predicted data of the data X, and then restore the data X based on the predicted data and the compression result. A difference lies in that the data A, B, C, and D are correspondingly replaced with data A, B, C, and D that are restored by the receive end.

It can be learned that, when the correlation between data is poor, a difference between the predicted data and the target data is relatively large, and consequently, a compression effect is poor. A first device in embodiments of this application may also be referred to as a sending device. Unless otherwise specified, the "first device" in this application may refer to the first device itself (for example, a network device or a terminal), or may refer to a component (for example, a processor, a chip, or a chip system) in the first device, or may be a logical module or software that can implement all or some of functions of the first device.

A second device in embodiments of this application may also be referred to as a receiving device. Unless otherwise specified, the "second device" in this application may refer to the second device itself (for example, a network device or a terminal), or may refer to a component (for example, a processor, a chip, or a chip system) in the second device, or may be a logical module or software that can implement all or some functions of the second device.

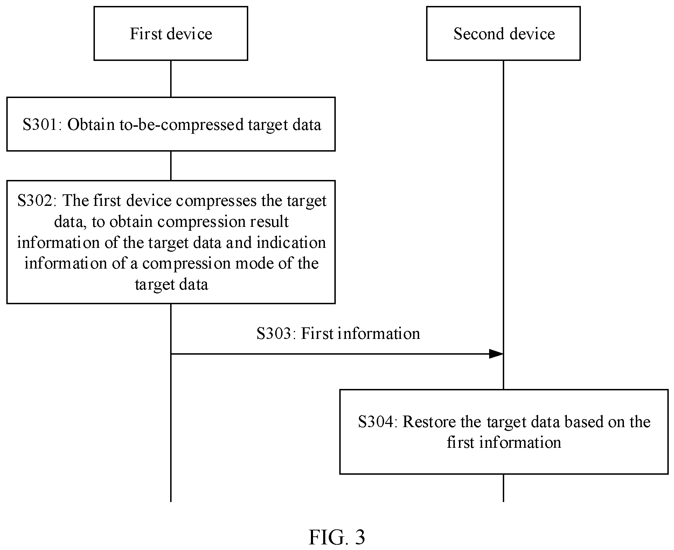

With reference to FIG. 3 to FIG. 9, the following describes in detail the method provided in embodiments of this application.

For example, FIG. 3 is a schematic flowchart 1 of the method according to an embodiment of this application. The method may be applicable to communication between any two devices shown in FIG. 1.

As shown in FIG. 3, the method includes the following steps.

S301: A first device obtains to-be-compressed target data.

The first device may be one end of compressing the target data, or the first device may be a transmit end. With reference to the communication system shown in FIG. 1 as an example, the first device may be a terminal or a network device. For example, in uplink transmission, the first device may be a terminal; and in downlink transmission, the first device may be a network device. On a sidelink (sidelink), the first device may be a terminal. The scenario herein is merely used as an example. In an actual implementation, the first device may further have another possible scenario, and details are not described herein again.

The target data is to-be-compressed data. The target data may be a floating point, for example, a parameter from a model, data sensed by a device, or point cloud data; or may be an integer, for example, data obtained after floating point quantization. It should be understood that the target data in this embodiment of this application is merely used as an example. In an actual implementation, the target data may alternatively be other possible data.

S302: The first device compresses the target data, to obtain compression result information of the target data and indication information of a compression mode of the target data.

In other words, the compression result information and the indication information of the compression mode of the target data are obtained by the first device by compressing the target data.

The compression result information includes first compressed data of the target data, and the first compressed data corresponds to the compression mode.

The compression mode is a mode used to compress data. For example, the compression mode may include prediction model-based compression and data set-based compression. In a solution of the prediction model-based compression, reconstructed data corresponding to data that has been compressed may be input into a prediction model (for example, the prediction model provided in FIG. 2), so that predicted data corresponding to the to-be-compressed data may be obtained, and compressed data may be obtained based on the to-be-compressed data and the predicted data. In a solution of the data set-based compression, one piece of data may be determined from a data set, and compressed data may be obtained based on the to-be-compressed data and the data determined from the data set. It may be understood that the compression modes herein are merely used as an example; and in an actual implementation, there may be another compression mode. For example, compressing data based on different data sets may be understood as different compression modes. For an implementation of the reconstructed data corresponding to the data that has been compressed, refer to the foregoing related descriptions. Details are not described herein again.

The compression mode of the target data is a compression manner used to compress the target data, and the compression mode of the target data may be one of the foregoing compression modes.

The indication information of the compression mode of the target data is information that indicates the compression mode of the target data. In a possible implementation solution, the indication information of the compression mode of the target data may include one or more bits. In other words, the compression mode of the target data may be indicated by using one or more bits. For example, when the compression mode includes the prediction model-based compression or the data set-based compression, the indication information of the compression mode of the target data may be implemented by using one bit. To be specific, the bit being "0" indicates that the compression mode of the target data is prediction model-based compression, and the bit being "1" indicates that the compression mode of the target data is data set-based compression; or the bit being "1" indicates that the compression mode of the target data is prediction model-based compression, and the bit being "0" indicates that the compression mode of the target data is data set-based compression. For another example, when the compression mode includes three compression modes: a compression mode 0 to a compression mode 2, the indication information of the compression mode of the target data may be implemented by using two bits. To be specific, the bits being "00" indicate that the compression mode of the target data is the compression mode 0, the bits being "01" indicate that the compression mode of the target data is the compression mode 1, and the bits being "11" indicate that the compression mode of the target data is the compression mode 3.

In some possible implementation solutions, different compression modes may correspond to different mode indexes (index), and the indication information of compression mode of the target data may indicate an index of the compression mode. For example, different values of the one or more bits that indicate different compression modes correspond to indexes of the different compression modes.

It should be understood that a relationship between a quantity of compression modes and a quantity of bits is not limited to that shown in the examples in this embodiment of this application. The indication information of the compression mode of the target data may also be implemented in another possible manner, and details are not described herein again.

The first compressed data is data obtained by compressing the target data based on the compression mode corresponding to the target data, and there is a correspondence between the first compressed data and the target data. It should be understood that there is a correspondence between the first compressed data and a combination of the target data and the compression mode corresponding to the target data. There is also a correspondence between the first compressed data and a compression mode in which the first compressed data is obtained through compression. The compression mode corresponding to the first compressed data is a compression mode used to compress the target data to obtain the first compressed data.

In a possible implementation solution, the first compressed data may be a first difference, and the compression result information includes indication information of first data. The first data is data in a first data set corresponding to the target data, the first data set includes at least one piece of data, and the first difference is a difference between the target data and the first data. In other words, the target data is compressed based on the first data in the first data set. In this way, it can avoid using the prediction model for prediction, and calculation complexity is reduced, thereby improving operating efficiency of the first device.

The first data set includes the at least one piece of data, in other words, the first data set may include one or more pieces of data. For example, the first data set may include data of a data index 0 to a data index N, where the data index 0 to the data index N each correspond to one piece of data, and a correspondence between a data index and data is shown in Table 1. N is a positive integer.

**Table 1**

| First data set | |
|---|---|
| Data index (index) | Data |
| 0 | 0.5 |
| 1 | -0.2 |
| ⋮ | ⋮ |
| *N* | 1.3 |

That the first data may be one piece of data in the first data set means that the first data may be any piece of data in the first data set. For example, the first data may be one piece of data, in the first data set, that is closest to the target data. It is assumed that data in the first data set includes 0.5, -0.1, 1.1, and 1.3, there are two pieces of data closest to the target data, and the first data is 1. In this case, the plurality of pieces of data closest to the target data are 1.1 and 1.3, and the first data may be one of 1.1 and 1.3.

In a possible implementation solution, the first data may be data that is in all data in the first data set and that is closest to the target data. In this way, a value of the first difference may be smaller, and a smaller amount of data may be occupied, thereby further improving a compression effect and reducing resource overheads.

It should be understood that the first data herein is merely used as an example. In an actual implementation, the first data may be alternatively implemented in another manner, and details are not described herein again.

For ease of understanding, the following further describes the first data set and the first data with reference to a scenario 1 to a scenario 3.

Scenario 1: The first data set may be generated by the first device. In this case, the method provided in FIG. 3 may further include a solution of a design 1.0 in the following design 1. For a principle of generating the first data set by the first device, refer to related descriptions in a design 1.1 to a design 1.3 in the following design 1.

Alternatively, the first data set may be configured by a second device. If the first data set is configured by the second device, the method provided in FIG. 3 may further include a solution shown in a design 2.0 in the following design 2, in other words, the first data set is configured by using the solution shown in the design 2.0 in the design 2. It should be understood that when the second device configures the first data set, the first data set may be determined by the second device. For a principle of determining the first data set by the second device, refer to related descriptions in a design 2.1 to a design 2.3 in the following design 2. Details are not described herein again.

Scenario 2: The first data set may be a data set obtained by updating an existing data set, for example, a second data set, by the first device.

In a possible implementation solution, the first data set is a data set obtained after second data in the second data set corresponding to the target data is replaced with the first data. The difference between the target data and the first data is less than or equal to a predicted difference threshold, and a difference between the target data and the second data is greater than the predicted difference threshold. In other words, when the difference between the target data and the second data is greater than the predicted difference threshold, the first data set may be obtained by replacing the second data in the second data set with the first data. That is, the data set may be updated based on the difference between the target data and the second data, so that the difference between the target data and the first data is smaller, thereby further improving accuracy of the compression result.

The second data set may be understood as an old first data set, that is, a first data set used in a process of compressing the target data before a current process of compressing the target data.

In a possible implementation solution, the second data may be data that is in the second data set and that is closest to the target data. In this way, the data set is updated based on the data that is in the data set and that is closest to the target data, so that the difference between the target data and the second data is smaller, thereby reducing frequency of updating the data set and reducing calculation complexity.

In a possible implementation solution, the first data may be determined by the first device based on the target data, or the first data may be determined by the first device based on the target data and the second data. In other words, the first data is correlated with the target data. In this way, the difference between the first data and the target data may be smaller, and accuracy of the compression result can be further improved.

It should be understood that, in the scenario 2, the first data indicated by first indication information is updated data whose difference from the target data meets the predicted difference threshold. Details are not described herein again.

Scenario 3: Different groups correspond to different data sets, for example, candidate data sets. The first data set is determined based on a group corresponding to a target data set.

In a possible implementation solution, the first data set may be one of candidate data sets respectively corresponding to a plurality of groups, and the candidate data set is used to predict to-be-compressed data. In other words, different groups may correspond to different candidate data sets. In this way, the candidate data sets may be respectively set based on features of data corresponding to the different groups, so that accuracy of the compression result can be further improved.

A group is a location corresponding to the to-be-compressed data. It should be understood that the location may include a time sequence location at which the to-be-compressed data appears, or a location of a space-domain resource used to carry the to-be-compressed data, or a location of a frequency-domain resource used to carry the to-be-compressed data, or a location of a space-frequency domain resource used to carry the to-be-compressed data.

In this embodiment of this application, locations corresponding to the to-be-compressed data may be divided into a plurality of groups, and each group includes non-repeated to-be-compressed data. For example, the to-be-compressed data is [1.2, 1.5, 0.8, 1.1, 8.3, 7.8, 10, 9.3, 11]. Locations corresponding to the to-be-compressed data are divided into two groups: a group 1 and a group 2. To-be-compressed data corresponding to the group 1 is [1.2, 1.5, 0.8, 1.1], and to-be-compressed data corresponding to the group 2 is [8.3, 7.8, 10, 9.3, 11].

The plurality of groups and the candidate data sets respectively corresponding to the plurality of groups may be implemented according to a solution provided in any one of the following designs 3 to 5.

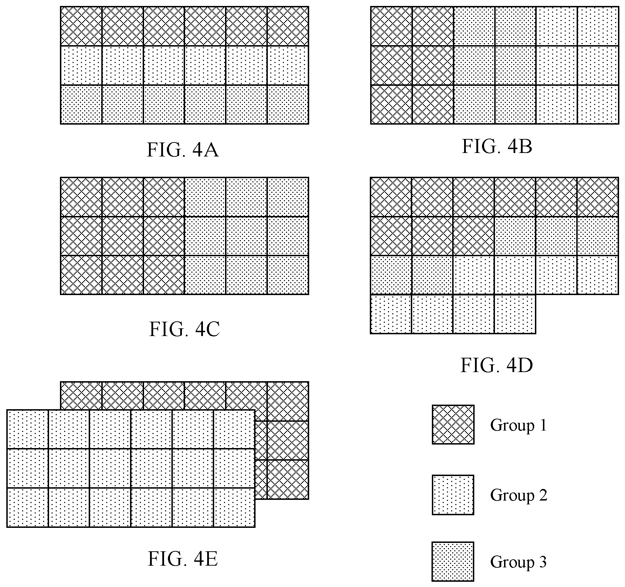

For a diagram of the candidate data sets corresponding to the groups, refer to FIG. 4A to FIG. 4E. As shown in FIG. 4A to FIG. 4E, each grid represents a location of one piece of data. It is assumed that there are three groups, namely, a group 1 to a group 3. As shown in FIG. 4A to FIG. 4D, each of the group 1 to the group 3 corresponds to one candidate data set, and different groups may correspond to different candidate data sets. For example, the group 1 to the group 3 sequentially correspond to different candidate data sets. It may be understood that different data transmission procedures may be further divided into different groups. As shown in FIG. 4E, a location of 1^{st} data transmission may be divided into a group 1, and the group 1 corresponds to a candidate data set 1; and a location of 2^{nd} data transmission is divided into a group 2, and the group 2 corresponds to a candidate data set 2. It should be understood that the groups in FIG. 4A to FIG. 4E are merely used as examples. In an actual implementation, there may be another group. Details are not described herein again.

It should be understood that a data set in this embodiment of this application, for example, the first data set, the second data set, or a candidate data set, may also be referred to as a prediction codebook, and data in the data set may also be referred to as a codeword.

The indication information of the first data may indicate a location or an index of the first data in the first data set. With reference to Table 1, for example, if the first data is 1.3 (it is assumed that only one piece of data in the first data set is 1.3), the indication information of the first data may indicate the data index N. It may be understood that the first data set and the first data herein are merely used as examples. In an actual implementation, the first data set and the first data may have other possible implementations, and details are not described herein again.

In this embodiment of this application, a difference may be understood as a deviation or a difference between two pieces of data. The first difference may also be referred to as a deviation of the first data relative to the target data. It should be understood that, in this embodiment of this application, the value of the first difference is a difference obtained by subtracting the first data from the target data, or the value of the first difference is a difference obtained by subtracting the target data from the first data.

In a possible implementation solution, the compression mode of the target data is determined based on a first condition. The first condition is determined based on the target data and the predicted data, of the target data, that is obtained based on the prediction model. In other words, the compression mode of the target data may be determined based on the target data and the predicted data, of the target data, that is obtained based on the prediction model. In this way, the compression mode can be flexibly matched, thereby further improving accuracy of the first compressed data.

In a possible implementation solution, precision of the first compressed data is higher than precision of second compressed data. The second compressed data is determined based on the target data and the predicted data. For example, when both the first compressed data and the second compressed data are numerical values, an absolute value of the first compressed data is less than or equal to an absolute value of the second compressed data. In this way, a data volume of the first compressed data may be less than that of the second compressed data, thereby reducing resource overheads.

In a possible implementation solution, the compression mode of the target data is determined based on a range of a second difference. The second difference is a difference between the target data and the predicted data. In this way, the compression mode can be matched based on the range of the second difference, thereby further improving accuracy of the first compressed data.

In a possible implementation solution, the range of the second difference is determined based on the predicted difference threshold, and the predicted difference threshold is configured by the second device or agreed on in a protocol. For example, when there are two compression modes, the range of the second difference includes: The second difference is less than or equal to a range of the predicted difference threshold corresponding to the target data; or the range of the second difference includes: The second difference is greater than the predicted difference threshold. In this way, the predicted difference threshold may be adjusted for different task requirements, so that prediction precision may be flexibly adjusted.

In a possible implementation solution, if the second difference is less than or equal to the predicted difference threshold corresponding to the target data, the compression result information is determined based on the predicted data, and the first compressed data is the second difference. If the second difference is greater than the predicted difference threshold, the compression result information is determined based on the first data. The first compressed data is the first difference, and the compression result information includes the indication information of the first data. The first data is the data in the first data set corresponding to the target data, the first data set includes the at least one piece of data, and the first difference is the difference between the target data and the first data. In other words, the compression mode may be matched based on the second difference. In this way, accuracy of the compression result may be improved, thereby improving a compression rate.

The range of the second difference is merely used as an example. In an actual implementation, the range of the second difference may have another possible implementation. For example, the range of the second difference may also include: The second difference is less than the range of the predicted difference threshold corresponding to the target data; or the range of the second difference includes: The second difference is greater than or equal to the predicted difference threshold.

It should be understood that when the compression mode includes two or more compression modes, a quantity of predicted difference thresholds is related to a quantity of compression modes. For example, the quantity of predicted difference thresholds=the quantity of compression modes-1. It is assumed that the compression mode includes a compression mode 0 to a compression mode 2. In this case, as shown in Table 2, each compression mode may correspond to one range of one piece of data. The range of the second difference may be one of the following Table 2. In this case, the compression mode corresponding to the target data is determined according to Table 2. For example, if the second difference is 1, the compression mode corresponding to the target data is the compression mode 1.

**Table 2**

| Compression mode | Value range |
|---|---|
| Compression mode 0 | [a0, a1) |
| Compression mode 1 | [a1, a2) |
| Compression mode 2 | [a2, a3) |

a0, a1, a2, and a3 are all positive numbers, and a0 < a1 < a2 < a3.

The compression result information is information that may be combined with the indication information of the compression mode to restore the target data.

In a possible implementation solution, the compression result information may further include the first data, or the compression result information may further include the first data and information that indicates that the second data set is updated.

It may be understood that the information that indicates that the second data set is updated may be implemented by using a bitmap. For example, the information that indicates that the second data set is updated may be represented by using a bit being "1". In this case, if the bit is "0", it may indicate that the second data set is not updated. Alternatively, the information that indicates that the second data set is updated may be represented by using a bit being "0". In this case, if the bit is "1", it may indicate that the second data set is not updated. Herein, the information that indicates that the second data set is updated is merely used as an example, and there may be another implementation. Details are not described herein again.

In this way, the first device may send the first data in time when the first data is updated.

In a possible implementation solution, the compression result information may further include indication information for updating, based on the first data, a second data set corresponding to the target data. For example, the indication information for updating, based on the first data, the second data set corresponding to the target data may be an index of data that is in the second data set and that is replaced by the first data, that is, an index of the second data.

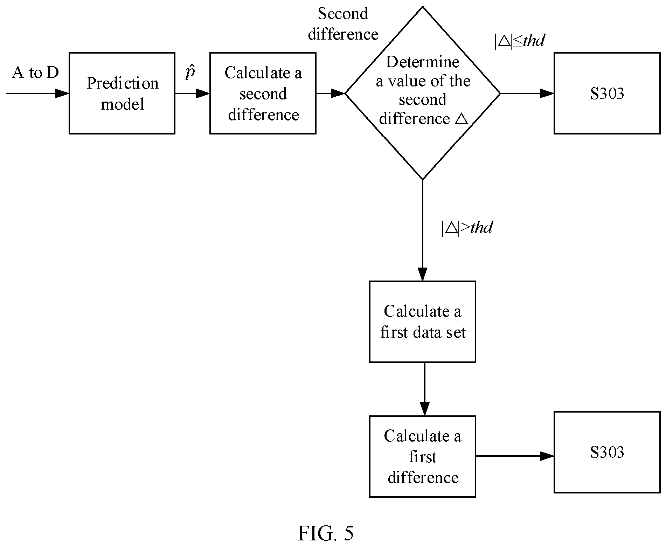

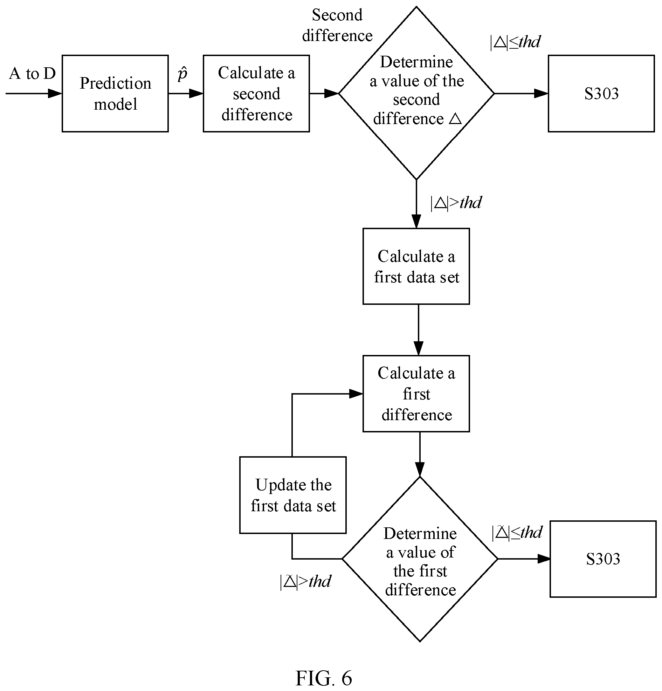

For ease of understanding, the following describes a principle of S302 by using examples with reference to FIG. 5 and FIG. 6. FIG. 5 is a schematic flowchart 1 of compressing the target data by the first device.

As shown in FIG. 5, in the scenario 1 or the scenario 3, it is assumed that the target data is *p*, and the data that has been compressed includes A to D. The data A to the data D are input into the prediction model to obtain the predicted data *p̂*, in other words, the predicted data of the target data is determined based on the prediction model. The first device determines the second difference Δ based on the predicted data *p̂* and the target data *p*, where the second difference Δ corresponding to the target data meets a relationship shown in the following formula (1): $Δ = p - \hat{p} .$

The first device determines the range of the second difference Δ, that is, a relationship between the second difference Δ and the predicted difference threshold *thd*. If |Δ| ≤ *thd*, a related step in S303 may be performed. In this case, the first compressed data in the compression result information is the second difference Δ, and the indication information of the compression mode of the target data indicates that the target data is compressed based on the prediction model. If |Δ| > *thd*, the first device determines the first data *p̃* from the first data set. For example, the first device determines data, in the first data set, closest to the target data as the first data. The first device calculates the first difference Δ̃ between the target data and the first data, where the first difference Δ̃ meets a relationship shown in the following formula (2): ${Δ}^{˜} = p - {p}^{˜} .$

In this case, the related step in S303 may be performed. In this case, the first compressed data in the compression result information is the first difference Δ̃, and the indication information of the compression mode of the target data indicates that compression is based on the data set.

FIG. 6 is a schematic flowchart 2 of compressing the target data by the first device. As shown in FIG. 6, in the scenario 2, it is assumed that the target data is *p*, and the data that has been compressed includes data A to data D. The data A to the data D are input into the prediction model to obtain the predicted data *p̂*, in other words, the predicted data of the target data is determined based on the prediction model. The first device determines the second difference Δbased on *p̂* and the target data *p*, where the second difference Δ corresponding to the target data meets the relationship shown in the foregoing formula (1):

The first device determines the range of the second difference Δ, that is, the relationship between the second difference Δ and the predicted difference threshold *thd*. If |Δ| ≤ *thd*, the related step in S303 may be performed. In this case, the first compressed data in the compression result information is the second difference Δ, and the indication information of the compression mode of the target data indicates that the target data is compressed based on the prediction model. If |Δ| > *thd*, the first device determines the first data *p̃* from the first data set, for example, determines data, in the first data set, closest to the target data as the first data. The first device calculates the first difference Δ̃ between the target data and the first data, where the first difference Δ̃ meets the relationship shown in the foregoing formula (2). | | indicates taking an absolute value.

The first device determines a range of the first difference. If |Δ̃| > *thd*, the first device may update the first data in the formula (2), to update the first data set. Updated first data is *p_{new}*. In this case, the first data in the formula (2) is the second data, and a first data set in which the first data in the formula (2) is located is the second data set. For implementations of the updated first data *p_{new}* and the first data set, refer to related descriptions in the scenario 2. Details are not described herein again.

The first device recalculates the first difference based on the updated first data and the updated first data set. For a calculation principle, refer to the formula (2), where *p̃*=*p_{new}*. The first device re-executes a process of determining the range of the first difference and the subsequent processes.

In the procedure shown in FIG. 6, if |Δ̃| ≤ *thd*, the related step in S303 may be performed.

If the first difference calculated based on the updated first data meets |Δ̃| < *thd*, the first compressed data in the compression result information is the first difference Δ̃ calculated based on the updated first data, and the indication information of the compression mode of the target data indicates the compression is based on the data set.

S303: The first device sends first information. Correspondingly, the second device receives the first information.

The first information includes the compression result information of the target data and the indication information of the compression mode of the target data.

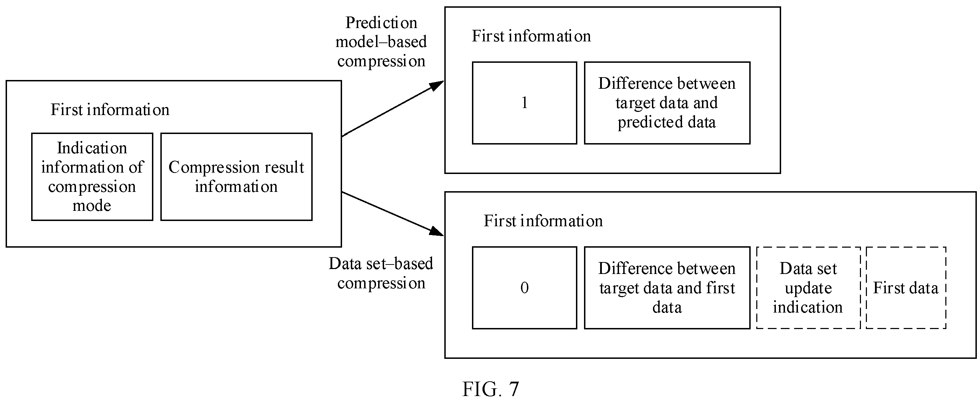

As shown in FIG. 7, it is assumed that the compression mode includes prediction model-based compression and data set-based compression, where a bit being "0" indicates the data set-based compression, and a bit being "1" indicates the prediction model-based compression. In this case, when the compression mode of the target data is the prediction model-based compression, the compression result information of the target data includes the difference between the target data and the predicted data.

When the compression mode of the target data is the data set-based compression, the compression result information of the target data includes an index of the first data and the difference between the target data and the first data. In addition, the compression result information of the target data may further include information that indicates whether the second data set is updated (that is, a data set update indication) and/or the first data.

The first information may be carried on a physical uplink shared channel (physical uplink shared channel, PUSCH). It should be understood that the PUSCH herein is merely used as an example. In an actual implementation, the first information may also be carried on another possible channel. Details are not described herein again. In this embodiment of this application, if there are a plurality of pieces of target data, the first indication information may include compression result information and indication information of compression modes of the plurality of pieces of target data. In this case, the first indication information may be assembled in the following assembling manners.

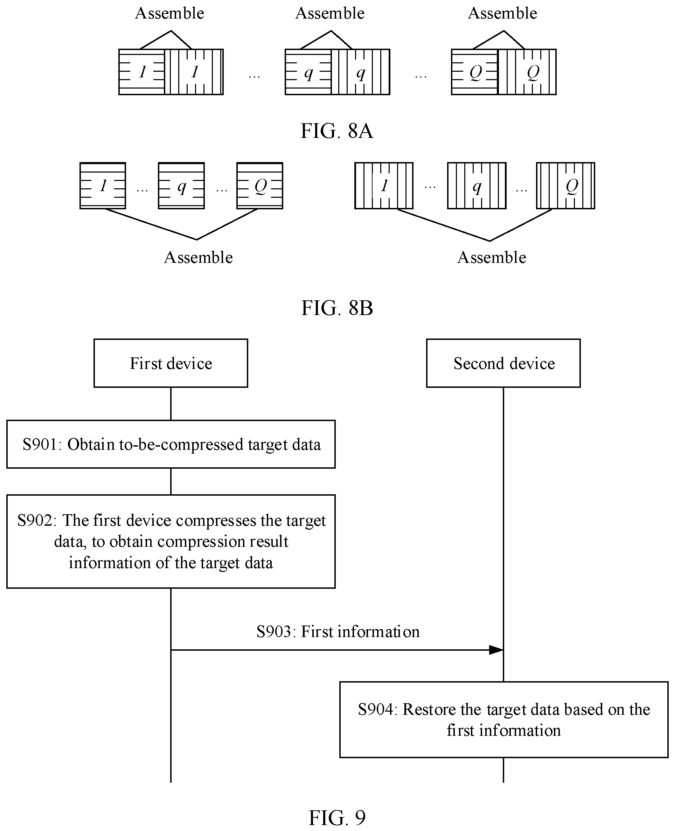

Manner 1: Compression result information and indication information of a compression mode of each piece of target data are separately assembled. As shown FIG. 8A, it is assumed that there are Q pieces of target data. In this case, indication information of a compression mode of the q^{th} piece of target data is assembled and compression result information of the q^{th} piece of target data is assembled. Q is a positive integer, and q is a positive integer less than or equal to Q.

Manner 2: Compression result information of all target data is assembled, and indication information of compression modes of all the target data is assembled. As shown in FIG. 8B, it is assumed that there are Q pieces of target data. In this case, indication information of compression modes of the Q pieces of target data is assembled, and compression result information of the Q pieces of target data is assembled.

It may be understood that, when there are two types of compression modes, the indication information of the compression mode of each piece of the target data may be implemented by using one bit, or may be implemented in another manner. Details are not described herein again.

It should be understood that, in an assembling process, quantities of bits occupied by indication information of compression modes of different target data may be the same or may be different. In this case, information used to identify that indication information of a compression mode of one piece of target data has ended exists between indication information of compression modes of the different target data.

S304: The second device restores the target data based on the first information.

In this embodiment of this application, the second device may obtain the first compressed data from the target data, and restore the target data based on the first compressed data and the compression mode of the target data.

The following provides further description by using an example with reference to the indication information of the compression mode of the target data in the first information.

If the indication information of the compression mode of the target data in the first information indicates prediction model-based compression, the second device may input data restored by the second device into a prediction model, to obtain the predicted data of the target data, and restore the target data based on the predicted data of the target data and the first compressed data in the first indication information. For example, if the first compressed data in the first indication information=the target data-the predicted data, the second device may restore the target data in the following manner: the target data=the first compressed data+the predicted data.

It should be understood that the prediction model used by the second device is consistent with the prediction model used by the first device. The prediction model may be pre-determined in a protocol, or may be negotiated by the first device and the second device through information exchange, or may be pre-configured in the first device and the second device. This is not limited in this embodiment of this application.

If the indication information of the compression mode of the target data in the first information indicates data set-based compression, the second device may determine the first data based on the index of the first data indicated by the first information, and restore the target data based on the first data and the first compressed data. For example, if the first compressed data in the first indication information=the target data-the first data, the second device may restore the target data in the following manner: the target data=the first compressed data-the first data.

It should be understood that, compared with the target data on a first device end, the target data restored by the second device may meet a performance indicator related to the target data on the first device end. In other words, the second device may restore the target data that meets the performance indicator.

According to the method provided in the first aspect, the first device may compress the target data and report the compression result information and the indication information of the compression mode of the target data, that is, the first information. The first compressed data in the compression result information corresponds to the indication information of the compression mode, in other words, the compression mode used to compress the target data matches the first compressed data. In this way, accuracy of the compression result can be improved, thereby improving the compression rate. Correspondingly, the second device may receive the first information, and restore the target data based on the first information. Because the first information includes the compression result information of the target data and the indication information of the compression mode of the target data, and the first compressed data corresponds to the compression mode, accuracy of the data compression result can be improved, so that the restored target data is more accurate.

Design 1: The first data set is generated by the first device itself, in other words, the first data set is determined by the first device.

### Design 1.0

In a possible implementation solution, the method provided in FIG. 3 may further include: The first device sends sixth information. Correspondingly, the second device receives the sixth information. In other words, the first device may indicate the first data set to the second device.

The sixth information indicates the first data set. It should be understood that the sixth information may be the index of the first data set, or may include other information of the index of the first data set. The index of the first data set may also be referred to as an identifier of the first data set.

In this scenario, the first device may determine the first data set by using the following design 1.1 to design 1.3.

### Design 1.1

The first device generates the first data set based on a value of a prediction error corresponding to the data that has been compressed. For example, the first device may determine, as the data in the first data set, data that corresponds to a large prediction error in prediction errors corresponding to the data that has been compressed. For example, corresponding data that is in data with a large prediction error and whose occurrence probability is greater than a probability threshold is determined as the data in the first data set. An index of each piece of data in the first data set may be positively or negatively correlated with a value of a prediction error corresponding to each piece of data that has been compressed. Herein, a relationship between the index of each piece of data in the first data set and the value of the prediction error corresponding to each piece of data that has been compressed is merely used as an example, and details are not described herein again.

It should be understood that, in this embodiment of this application, unless otherwise specified, "data" refers to data that needs to be compressed before being transmitted to the second device by the first device, and the data may be data that has been compressed, or may be to-be-compressed data. Details are not described subsequently again.

### Design 1.2

The first device may determine the first data set based on a value range of the to-be-compressed data. For example, the first data set includes M pieces of data within the value range of the to-be-compressed data, and intervals between any two pieces of adjacent data in the M pieces of data are equal. In other words, the prediction codebook is a uniform codebook.

### Design 1.3

The first device may generate the first data set based on mathematical distribution that the data that has been compressed meets. For example, in the first data set, an interval between two adjacent pieces of data with a higher occurrence frequency is less than an interval between two adjacent pieces of data with a lower occurrence frequency.

Design 2: The first data is configured by the second device.

### Design 2.0

In a possible implementation solution, before the first device compresses the target data to obtain the compression result information of the target data and the indication information of the compression mode of the target data, the method provided in FIG. 3 may further include: The second device sends seventh information. Correspondingly, the first device receives the seventh information. The seventh information indicates the first data set. It should be understood that the sixth information may be the index of the first data set, or may include other information of the index of the first data set. The index of the first data set may also be referred to as the identifier of the first data set.

In this scenario, the second device may determine the first data set by using the following designs 2.1 to 2.3.

### Design 2.1

The second device generates the first data set based on observation data, that is, a value of a prediction error corresponding to data decompressed or restored by the second device. It may be understood that each piece of observation data corresponds to one piece of data that has been compressed in the design 1.1. For example, the second device may determine, as the data in the first data set, observation data that corresponds to a large prediction error in prediction errors corresponding to the observation data. For example, corresponding data that is in observation data with a large prediction error and whose occurrence probability is greater than a probability threshold is determined as the data in the first data set. The index of each piece of data in the first data set may be positively or negatively correlated with the value of the prediction error corresponding to each piece of observation data. Herein, a relationship between the index of each piece of data in the first data set and the value of the prediction error corresponding to each piece of data that has been compressed is merely used as an example, and details are not described herein again.

### Design 2.2

The second device may determine the first data set based on the value range of the to-be-compressed data. For example, the first data set includes M pieces of data within the value range of the to-be-compressed data, and intervals between any two pieces of adjacent data in the M pieces of data are equal. In other words, the prediction codebook is a uniform codebook.

It should be understood that, in this design, the value range of the to-be-compressed data may be indicated by information sent by the first device to the second device.

### Design 2.3

The second device may generate the first data set based on mathematical distribution that the observation data meets. For example, in the first data set, an interval between two adjacent pieces of data with a higher occurrence frequency is less than an interval between two adjacent pieces of data with a lower occurrence frequency.

### Design 3

In a possible implementation solution, the method provided in FIG. 3 may further include: The second device sends second information. Correspondingly, the first device receives the second information. The second information indicates the plurality of groups and the candidate data sets respectively corresponding to the plurality of groups. In other words, another device may configure the plurality of groups and the candidate data sets respectively corresponding to the plurality of groups. In this way, processing complexity of the first device can be reduced, thereby improving operating efficiency.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located. In this case, the first device may determine a candidate data set, that is, the first data set, based on the target data, so that the first data set matches the target data, thereby further improving accuracy of the compression result of the target data.

### Design 4

In a possible implementation solution, the method provided in FIG. 3 may further include: The second device sends third information. Correspondingly, the first device receives the third information. The third information indicates the plurality of groups. In this way, the plurality of groups may be configured by another device, for example, the second device, to reduce operating complexity of the first device.

In a possible implementation solution, the method provided in FIG. 3 may further include: The first device sends fourth information. Correspondingly, the second device receives the fourth information. The fourth information indicates a candidate data set corresponding to each of the plurality of groups, and the candidate data set corresponding to each of the plurality of groups is determined by the first device based on the plurality of groups. For example, the first device may determine the candidate data set based on the data that has been compressed. In this way, accuracy of the compression result can be further improved.

In a possible implementation solution, the third information further indicates that the plurality of groups are configured by the second device, and the candidate data sets respectively corresponding to the plurality of groups are determined by the first device.

### Design 5

In a possible implementation solution, the method provided in FIG. 3 may further include: The second device sends fifth information. Correspondingly, the first device receives the fifth information. The fifth information indicates that the plurality of groups are determined by the first device, and the candidate data sets respectively corresponding to the plurality of groups are determined by the first device.

In this way, the first device may determine the candidate data set based on the data that has been compressed, thereby further improving accuracy of the compression result.

It should be understood that the solutions provided in embodiments of this application may be used in combination with each other when logic is met. Details are not described herein again.

In some possible design solutions, a data compression method and a data decompression method are provided. In the data compression method, to-be-compressed target data may be compressed based on a data set, so that calculation complexity can be reduced, and operating efficiency can be improved. It should be understood that, in this embodiment, naming in this application is independent of naming in the embodiment provided in FIG. 3. For details, refer to related descriptions in this embodiment. The following provides descriptions with reference to FIG. 9. As shown in FIG. 9, the method includes the following steps.

S901: A first device obtains to-be-compressed target data.

For implementations of the first device and the target data, refer to related descriptions in S301. For an implementation of S901, refer to related descriptions in S301. Details are not described herein again.

S902: The first device compresses the target data to obtain compression result information of the target data.

The compression result information includes first compressed data and indication information of first data. The first data is data in a first data set corresponding to the target data, the first data set includes at least one piece of data, and the first compressed data is determined based on the target data and the first data.

In a possible implementation solution, the first compressed data is a first difference, and the first difference is a difference between the target data and the first data.

In a possible implementation solution, the first data may be data that is in all data in the first data set and that is closest to the target data.

In a possible implementation solution, the compression result information may further include the first data, or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in the second data set corresponding to the target data is replaced with the first data. The difference between the target data and the first data is less than or equal to a predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

For implementations of the second data and the second data set, correspondingly refer to related descriptions of the second data and the second data set in S302. Details are not described herein again.

In a possible implementation solution, the first data set may be one of candidate data sets respectively corresponding to a plurality of groups, and the candidate data set is used to predict to-be-compressed data.

For implementations of the compression result information, the first data, the first data set, and the indication information of the first data, refer to related descriptions in S302. Details are not described herein again.

For an implementation of S902, refer to related descriptions in S302 in FIG. 3. Details are not described herein again.

S903: The first device sends first information. Correspondingly, the second device receives the first information.

For an implementation of S903, refer to the related descriptions in S303. Details are not described herein again.

S904: The second device restores the target data based on the first information.

For an implementation of S904, refer to related descriptions that the indication information of the compression mode of the target data in the first information indicates data set-based compression in S304. Details are not described herein again.

The first information includes the compression result information of the target data.

According to the data compression method provided in FIG. 9, the first device compresses the obtained to-be-compressed target data, to obtain the compression result information of the target data. The compression result information includes the first compressed data and the indication information of the first data, in other words, the target data may be compressed based on the first data in the first data set. Correspondingly, in this way, it can avoid using a prediction model for prediction, calculation complexity can be reduced, and operating efficiency of the first device can be improved. Correspondingly, the second device restores the target data based on the received first information. The compression result information includes the first compressed data and the indication information of the first data, in other words, the second device may restore the target data based on the first compressed data and the first data in the first data set. In this way, it can avoid using a prediction model for prediction, calculation complexity can be reduced, and operating efficiency of the second device can be improved.

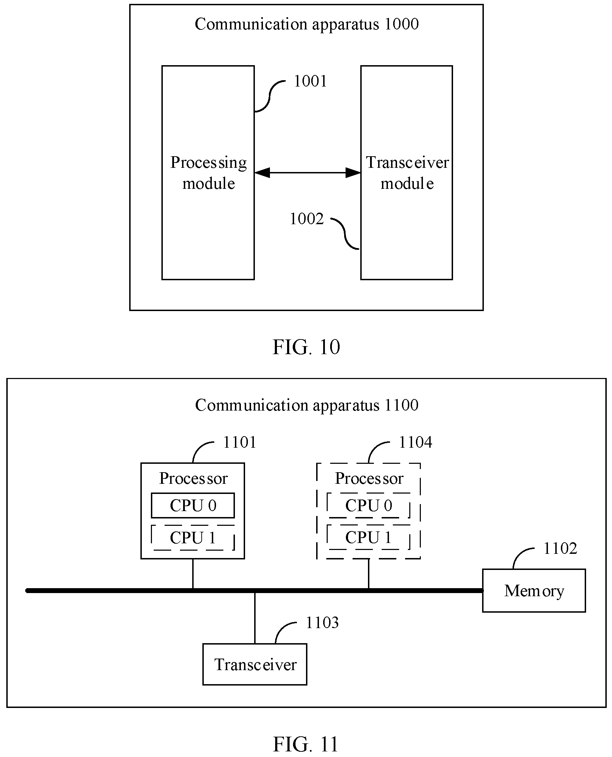

The method provided in embodiments of this application is described in detail above with reference to FIG. 3 to FIG. 9. The following describes in detail communication apparatuses configured to perform the methods provided in embodiments of this application with reference to FIG. 10 and FIG. 11.

For example, FIG. 10 is a diagram 1 of a structure of a communication apparatus according to an embodiment of this application. As shown in FIG. 10, the communication apparatus 1000 includes a processing module 1001 and a transceiver module 1002. For ease of description, FIG. 10 shows only main components of the communication apparatus 1000.

In some embodiments, the communication apparatus 1000 may be used in the communication system shown in FIG. 1, and executes a function of the first device in the method shown in FIG. 3.

The processing module 1001 is configured to obtain to-be-compressed target data. The processing module 1001 is further configured to compress the target data, to obtain compression result information of the target data and indication information of a compression mode of the target data. The compression result information includes first compressed data of the target data, and the first compressed data corresponds to the compression mode. The transceiver module 1002 is configured to send first information. The first information includes the compression result information of the target data and the indication information of the compression mode of the target data.

In a possible implementation solution, the first compressed data may be a first difference, and the compression result information includes indication information of first data. The first data is data in a first data set corresponding to the target data, the first data set includes at least one piece of data, and the first difference is a difference between the target data and the first data.

In a possible implementation solution, the compression mode of the target data is determined based on a first condition. The first condition is determined based on the target data and predicted data, of the target data, that is obtained based on a prediction model.

In a possible implementation solution, precision of the first compressed data is higher than precision of second compressed data. The second compressed data is determined based on the target data and the predicted data.

In a possible implementation solution, the compression mode of the target data is determined based on a range of a second difference. The second difference is a difference between the target data and the predicted data.

In a possible implementation solution, the range of the second difference is determined based on a predicted difference threshold, and the predicted difference threshold is configured by the second device or agreed on in a protocol.

In a possible implementation solution, if the second difference is less than or equal to the predicted difference threshold corresponding to the target data, the compression result information is determined based on the predicted data, and the first compressed data is the second difference. If the second difference is greater than the predicted difference threshold, the compression result information is determined based on the first data. The first compressed data is the first difference, and the compression result information includes the indication information of the first data. The first data is the data in the first data set corresponding to the target data, the first data set includes the at least one piece of data, and the first difference is the difference between the target data and the first data.

In a possible implementation solution, the first data may be data that is in all data in the first data set and that is closest to the target data.

In a possible implementation solution, the compression result information may further include the first data; or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to the predicted difference threshold, and a difference between the target data and the second data is greater than the predicted difference threshold.

In a possible implementation solution, the second data may be data that is in the second data set and that is closest to the target data.

In a possible implementation solution, the first data may be determined by the communication apparatus 1000 based on the target data, or the first data may be determined by the communication apparatus 1000 based on the target data and the second data.

In a possible implementation solution, the first data set may be one of candidate data sets respectively corresponding to a plurality of groups, and the candidate data set is used to predict to-be-compressed data.

In a possible implementation solution, the transceiver module 1002 is further configured to receive second information. The second information indicates the plurality of groups and the candidate data sets respectively corresponding to the plurality of groups.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located.

In a possible implementation solution, the transceiver module 1002 is further configured to receive third information. The third information indicates the plurality of groups.

In a possible implementation solution, the transceiver module 1002 is further configured to send fourth information. The fourth information indicates a candidate data set corresponding to each of the plurality of groups, and the candidate data set corresponding to each of the plurality of groups is determined by the communication apparatus 1000 based on the plurality of groups.

In a possible implementation solution, the third information further indicates that the plurality of groups are configured by the second device, and the candidate data sets respectively corresponding to the plurality of groups are determined by the communication apparatus 1000.

In a possible implementation solution, the transceiver module 1002 is further configured to receive fifth information. The fifth information indicates that the plurality of groups are determined by the communication apparatus 1000, and the candidate data sets respectively corresponding to the plurality of groups are determined by the communication apparatus 1000.

In a possible implementation solution, the first data set is determined by the communication apparatus 1000, and the transceiver module 1002 is further configured to send sixth information, where the sixth information indicates the first data set.

In a possible implementation solution, the transceiver module 1002 is further configured to receive seventh information. The seventh information indicates the first data set.

Optionally, the transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to execute a function of the first device in the method shown in any implementation solution of FIG. 3.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1000, refer to technical effects of the method shown in any implementation solution of FIG. 3. Details are not described herein again.

In some other embodiments, the communication apparatus 1000 may be used in the communication system shown in FIG. 1, and executes a function of the second device in the method shown in FIG. 3.

The transceiver module 1002 is configured to receive first information. The first information includes compression result information of target data and indication information of a compression mode of the target data. The compression result information and the indication information of the compression mode of the target data are obtained by a first device by compressing the target data. The compression result information includes first compressed data of the target data, and the first compressed data corresponds to the compression mode. The processing module 1001 is configured to restore the target data based on the first information.

In a possible implementation solution, the first compressed data is a first difference, and the compression result information may include indication information of first data. The first data is data in a first data set corresponding to the target data, the first data set includes at least one piece of data, and the first difference is a difference between the target data and the first data.

In a possible implementation solution, the compression mode of the target data is determined based on a first condition. The first condition is determined based on the target data and predicted data, of the target data, that is obtained based on a prediction model.

In a possible implementation solution, precision of the first compressed data is higher than precision of second compressed data. The second compressed data is determined based on the target data and the predicted data.

In a possible implementation solution, the compression mode of the target data is determined based on a range of a second difference. The second difference is a difference between the target data and the predicted data.

In a possible implementation solution, the range of the second difference is determined based on a predicted difference threshold, and the predicted difference threshold is configured by the communication apparatus 1000 or agreed on in a protocol.

In a possible implementation solution, if the second difference is less than or equal to the predicted difference threshold corresponding to the target data, the compression result information is determined based on the predicted data, and the first compressed data is the second difference. If the second difference is greater than the predicted difference threshold, the compression result information is determined based on the first data. The first compressed data is the first difference, and the compression result information includes the indication information of the first data. The first data is the data in the first data set corresponding to the target data, the first data set includes the at least one piece of data, and the first difference is the difference between the target data and the first data.

In a possible implementation solution, the first data may be data that is in all data in the first data set and that is closest to the target data.

In a possible implementation solution, the compression result information further includes the first data, or the compression result information further includes the first data and information that indicates that a second data set is updated.

In a possible implementation solution, the compression result information further includes indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to the predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

In a possible implementation solution, the first data set may be one of candidate data sets respectively corresponding to a plurality of groups, and the candidate data set is used to predict to-be-compressed data.

In a possible implementation solution, the transceiver module 1002 is further configured to send second information. The second information indicates the plurality of groups and the candidate data sets respectively corresponding to the plurality of groups.

In a possible implementation solution, the second information further indicates that the plurality of groups are configured by the communication apparatus 1000, and the candidate data sets respectively corresponding to the plurality of groups are configured by the communication apparatus 1000.

In a possible implementation solution, the first information may further include indication information that indicates a candidate data set corresponding to a group, in the plurality of groups, in which the target data is located.

In a possible implementation solution, the transceiver module 1002 is further configured to send third information. The third information indicates the plurality of groups.

In a possible implementation solution, the transceiver module 1002 is further configured to receive fourth information. The fourth information indicates a candidate data set corresponding to each of the plurality of groups, and the candidate data set corresponding to each of the plurality of groups is determined by the first device based on the plurality of groups.

In a possible implementation solution, the third information further indicates that the plurality of groups are configured by the communication apparatus 1000, and the candidate data sets respectively corresponding to the plurality of groups are configured by the first device.

In a possible implementation solution, the transceiver module 1002 is further configured to send fifth information. The fifth information indicates that the plurality of groups are determined by the first device, and the candidate data sets respectively corresponding to the plurality of groups are determined by the first device.

In a possible implementation solution, the first data set is determined by the first device, and the transceiver module 1002 is further configured to receive sixth information, where the sixth information indicates the first data set.

In a possible implementation solution, the transceiver module 1002 is further configured to send seventh information. The seventh information indicates the first data set.

Optionally, the transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to execute a function of the second device in the method shown in any implementation solution of FIG. 3.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1000, refer to technical effects of the method shown in any implementation solution of FIG. 3. Details are not described herein again.

In some other embodiments, the communication apparatus 1000 may be used in the communication system shown in FIG. 1, and executes a function of the first device in the method shown in FIG. 9.

The processing module 1001 is configured to obtain to-be-compressed target data. The processing module 1001 is further configured to compress the target data to obtain compression result information of the target data. The compression result information includes first compressed data and indication information of first data. The first data is data in a first data set corresponding to the target data, the first data set includes at least one piece of data, and the first compressed data is determined based on the target data and the first data. The transceiver module 1002 is configured to send first information. The first information includes the compression result information of the target data.

In a possible implementation solution, the first compressed data is a first difference, and the first difference is a difference between the target data and the first data.

In a possible implementation solution, the first data may be data that is in all data in the first data set and that is closest to the target data.

In a possible implementation solution, the compression result information may further include the first data; or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to a predicted difference threshold, and a difference between the target data and the second data is greater than the predicted difference threshold.

In a possible implementation solution, the second data may be data that is in the second data set and that is closest to the target data.

In a possible implementation solution, the first data may be determined by the communication apparatus 1000 based on the target data, or the first data may be determined by the communication apparatus 1000 based on the target data and the second data.

In a possible implementation solution, the first data set may be one of candidate data sets respectively corresponding to a plurality of groups, and the candidate data set is used to predict to-be-compressed data.

In a possible implementation solution, the transceiver module 1002 is further configured to receive second information. The second information indicates the plurality of groups and the candidate data sets respectively corresponding to the plurality of groups.

In a possible implementation solution, the second information further indicates that the plurality of groups are configured by the second device, and the candidate data sets respectively corresponding to the plurality of groups are configured by the second device.

In a possible implementation solution, the first information may further include indication information that indicates a candidate data set corresponding to a group, in the plurality of groups, in which the target data is located.

In a possible implementation solution, the transceiver module 1002 is further configured to receive third information. The third information indicates the plurality of groups.

In a possible implementation solution, the transceiver module 1002 is further configured to send fourth information. The fourth information indicates a candidate data set corresponding to each of the plurality of groups, and the candidate data set corresponding to each of the plurality of groups is determined by the communication apparatus 1000 based on the plurality of groups.

In a possible implementation solution, the third information further indicates that the plurality of groups are configured by the second device, and the candidate data sets respectively corresponding to the plurality of groups are determined by the communication apparatus 1000.

In a possible implementation solution, the transceiver module 1002 is further configured to receive fifth information. The fifth information indicates that the plurality of groups are determined by the communication apparatus 1000, and the candidate data sets respectively corresponding to the plurality of groups are determined by the communication apparatus 1000.

In a possible implementation solution, the first data set is determined by the communication apparatus 1000, and the transceiver module 1002 is further configured to send sixth information, where the sixth information indicates the first data set.

In a possible implementation solution, the transceiver module 1002 is further configured to receive seventh information. The seventh information indicates the first data set.

Optionally, the transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to execute a function of the first device in the method shown in any implementation solution of FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1000, refer to technical effects of the method shown in any implementation solution of FIG. 9. Details are not described herein again.

In some other embodiments, the communication apparatus 1000 may be used in the communication system shown in FIG. 1, and executes a function of the second device in the method shown in FIG. 9.

The transceiver module 1002 is configured to receive first information. The first information includes compression result information of target data. The compression result information includes first compressed data and indication information of first data. The first data is data in a first data set corresponding to the target data, the first data set includes at least one piece of data, and the first compressed data is determined based on the target data and the first data. The processing module 1001 is configured to restore the target data based on the first information.

In a possible implementation solution, the first compressed data is a first difference, and the first difference is a difference between the target data and the first data.

In a possible implementation solution, the first data may be data that is in all data in the first data set and that is closest to the target data.

In a possible implementation solution, the compression result information may further include the first data; or the compression result information may further include the first data and information that indicates that a second data set is updated.

In a possible implementation solution, the compression result information may further include indication information for updating, based on the first data, a second data set corresponding to the target data.

In a possible implementation solution, the first data set is a data set obtained after second data in a second data set corresponding to the target data is replaced with the first data. The difference between the target data and the first data is less than or equal to a predicted difference threshold, and a difference between the target data and the second data is greater than the predicted difference threshold.

In a possible implementation solution, the second data may be data that is in the second data set and that is closest to the target data.

In a possible implementation solution, the first data may be determined by the first device based on the target data, or the first data may be determined by the first device based on the target data and the second data.

In a possible implementation solution, the first data set may be one of candidate data sets respectively corresponding to a plurality of groups, and the candidate data set is used to predict to-be-compressed data.

In a possible implementation solution, the transceiver module 1002 is further configured to send second information. The second information indicates the plurality of groups and the candidate data sets respectively corresponding to the plurality of groups.

In a possible implementation solution, the second information further indicates that the plurality of groups are configured by the communication apparatus 1000, and the candidate data sets respectively corresponding to the plurality of groups are configured by the communication apparatus 1000.

In a possible implementation solution, the first information may further include indication information that indicates a candidate data set corresponding to a group, in the plurality of groups, in which the target data is located.

In a possible implementation solution, the transceiver module 1002 is further configured to send third information. The third information indicates the plurality of groups.

In a possible implementation solution, the transceiver module 1002 is further configured to receive fourth information. The fourth information indicates a candidate data set corresponding to each of the plurality of groups, and the candidate data set corresponding to each of the plurality of groups is determined by the first device based on the plurality of groups.

In a possible implementation solution, the third information further indicates that the plurality of groups are configured by the communication apparatus 1000, and the candidate data sets respectively corresponding to the plurality of groups are determined by the first device.

In a possible implementation solution, the transceiver module 1002 is further configured to send fifth information. The fifth information indicates that the plurality of groups are determined by the first device, and the candidate data sets respectively corresponding to the plurality of groups are determined by the first device.

In a possible implementation solution, the first data set is determined by the first device, and the transceiver module 1002 is further configured to receive sixth information. The sixth information indicates the first data set.

In a possible implementation solution, the transceiver module 1002 is further configured to send seventh information. The seventh information indicates the first data set.

Optionally, the transceiver module 1002 may include a receiving module and a sending module (not shown in FIG. 10). The transceiver module 1002 is configured to implement a sending function and a receiving function of the communication apparatus 1000.

Optionally, the communication apparatus 1000 may further include a storage module (not shown in FIG. 10). The storage module stores a program or instructions. When the processing module 1001 executes the program or the instructions, the communication apparatus 1000 is enabled to execute a function of the second device in the method shown in any implementation solution of FIG. 9.

It should be understood that the processing module 1001 in the communication apparatus 1000 may be implemented by a processor or a processor-related circuit component, and may be a processor or a processing unit. The transceiver module 1002 may be implemented by a transceiver or a transceiver-related circuit component, and may be a transceiver or a transceiver unit.

It should be noted that the communication apparatus 1000 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1000, refer to technical effects of the method shown in any implementation solution of FIG. 9. Details are not described herein again.

For example, FIG. 11 is a diagram 2 of a structure of a communication apparatus according to an embodiment of this application. The communication apparatus may be a terminal or a network device, or may be a chip (system) or another part or component that may be disposed in a terminal or a network device. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and the transceiver 1103, for example, through a communication bus.

The following describes components of the communication apparatus 1100 in detail with reference to FIG. 11.

The processor 1101 is a control center of the communication apparatus 1100; and may be one processor, or may be a general term of a plurality of processing elements. For example, the processor 1101 is one or more central processing units (central processing unit, CPU), or may be an application-specific integrated circuit (application-specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1101 may execute various functions of the communication apparatus 1100 by running or executing a software program stored in the memory 1102 and invoking data stored in the memory 1102.

In a specific implementation, in an embodiment, the processor 1101 may include one or more CPUs, for example, a CPU 0 and a CPU 1 shown in FIG. 11.

In a specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

Optionally, the memory 1102 may be integrated with a processor (for example, 1101).

The memory 1102 is configured to store a software program for performing the solutions of this application, and the processor 1101 controls execution of the software program. For a specific implementation, refer to the foregoing method embodiments. Details are not described herein again.

Optionally, the memory 1102 may be a read-only memory (read-only memory, ROM) or another type of static storage device capable of storing static information and instructions, or may be a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, or the like), a magnetic disk storage medium or another magnetic storage device, or any other medium capable of carrying or storing expected program code in a form of an instruction or a data structure and capable of being accessed by a computer. However, this is not limited. The memory 1102 may be integrated with the processor 1101; or may exist independently and is coupled to the processor 1101 through an interface circuit (not shown in FIG. 11) of the communication apparatus 1100. This is not specifically limited in this embodiment of this application.

The transceiver 1103 is configured to communicate with another communication apparatus; and may be an input/output interface or a communication interface. The transceiver may be an input/output interface, an interface circuit, an output circuit, an input circuit, a pin, a related circuit, or the like on a chip, a chip system, or a circuit.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently.

It should be noted that the structure of the communication apparatus 1100 shown in FIG. 11 does not constitute a limitation on the communication apparatus. An actual communication apparatus may include more or fewer parts than those shown in the figure, or combine some parts, or have different part arrangements.

In addition, for technical effects of the communication apparatus 1000, refer to the technical effects of the method in the foregoing method embodiments. Details are not described herein again.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include both a volatile memory and a nonvolatile memory. The nonvolatile memory may be a ROM, a programmable read-only memory (programmable ROM, PROM), an erasable programmable read-only memory (erasable PROM, EPROM), an EEPROM, or a flash memory. The volatile memory may be a RAM and is used as an external cache. By way of example rather than limitation, a plurality of forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

All or some of the foregoing embodiments may be implemented through software, hardware (for example, a circuit), firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, "A and/or B" may represent the following three cases: A exists alone, both A and B exist, and B exists alone, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a singular item (piece) or any combination of plural items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented through electronic hardware or a combination of computer software and electronic hardware. Whether the functions are performed through hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into units is merely logical function division and there may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate; and parts displayed as units may or may not be physical units, in other words, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, a part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

## Claims

1. A data compression method, applied to a first device, wherein the method comprises:
obtaining to-be-compressed target data;
compressing the target data, to obtain compression result information of the target data and indication information of a compression mode of the target data, wherein the compression result information comprises first compressed data of the target data, and the first compressed data corresponds to the compression mode; and
sending first information, wherein the first information comprises the compression result information of the target data and the indication information of the compression mode of the target data.

2. The method according to claim 1, wherein the first compressed data is a first difference, the compression result information comprises indication information of first data, the first data is data in a first data set corresponding to the target data, the first data set comprises at least one piece of data, and the first difference is a difference between the target data and the first data.

3. The method according to claim 1 or 2, wherein the compression mode of the target data is determined based on a first condition, and the first condition is determined based on the target data and predicted data, of the target data, that is obtained based on a prediction model.

4. The method according to claim 3, wherein precision of the first compressed data is higher than precision of second compressed data, and the second compressed data is determined based on the target data and the predicted data.

5. The method according to claim 3, wherein the compression mode of the target data is determined based on a range of a second difference, and the second difference is a difference between the target data and the predicted data.

6. The method according to claim 5, wherein the range of the second difference is determined based on a predicted difference threshold, and the predicted difference threshold is configured by a second device or agreed on in a protocol.

7. The method according to claim 5 or 6, wherein
if the second difference is less than or equal to the predicted difference threshold corresponding to the target data, the compression result information is determined based on the predicted data, and the first compressed data is the second difference; and
if the second difference is greater than the predicted difference threshold, the compression result information is determined based on the first data, the first compressed data is the first difference, the compression result information comprises the indication information that indicates the first data, the first data is the data in the first data set corresponding to the target data, the first data set comprises the at least one piece of data, and the first difference is the difference between the target data and the first data.

8. The method according to claim 7, wherein the first data is data that is in all data in the first data set and that is closest to the target data.

9. The method according to claim 7 or 8, wherein
the compression result information further comprises the first data; or
the compression result information further comprises the first data and information that indicates that the second data set is updated.

10. The method according to claim 7, wherein the first data set is a data set obtained after second data in a second data set corresponding to the target data is replaced with the first data, the difference between the target data and the first data is less than or equal to the predicted difference threshold, and a difference between the target data and the second data is greater than the predicted difference threshold.

11. The method according to claim 10, wherein the second data is data that is in the second data set and that is closest to the target data.

12. The method according to claim 10 or 11, wherein the first data is determined by the first device based on the target data, or the first data is determined by the first device based on the target data and the second data.

13. The method according to claim 2, 7, or 8, wherein the first data set is one of candidate data sets respectively corresponding to a plurality of groups, and the candidate data set is used to predict to-be-compressed data.

14. The method according to claim 13, wherein the method further comprises:
receiving second information, wherein the second information indicates the plurality of groups and the candidate data sets respectively corresponding to the plurality of groups.

15. The method according to claim 14, wherein the first information further comprises indication information that indicates a candidate data set corresponding to a group, in the plurality of groups, in which the target data is located.

16. The method according to claim 13, wherein the method further comprises:
receiving third information, wherein the third information indicates the plurality of groups.

17. The method according to claim 16, wherein the method further comprises: sending fourth information, wherein the fourth information indicates a candidate data set corresponding to each of the plurality of groups, and the candidate data set corresponding to each of the plurality of groups is determined by the first device based on the plurality of groups.

18. The method according to claim 13, wherein the method further comprises:
receiving fifth information, wherein the fifth information indicates that the plurality of groups are determined by the first device, and the candidate data sets respectively corresponding to the plurality of groups are determined by the first device.

19. A data decompression method, applied to a second device, wherein the method comprises:
receiving first information, wherein the first information comprises compression result information of target data and indication information of a compression mode of the target data, the compression result information and the indication information of the compression mode of the target data are obtained by a first device by compressing the target data, the compression result information comprises first compressed data of the target data, and the first compressed data corresponds to the compression mode; and
restoring the target data based on the first information.

20. The method according to claim 19, wherein the first compressed data is a first difference, the compression result information comprises indication information of first data, the first data is data in a first data set corresponding to the target data, the first data set comprises at least one piece of data, and the first difference is a difference between the target data and the first data.

21. The method according to claim 19 or 20, wherein the compression mode of the target data is determined based on a first condition, and the first condition is determined based on the target data and predicted data, of the target data, that is obtained based on a prediction model.

22. The method according to claim 21, wherein precision of the first compressed data is higher than precision of second compressed data, and the second compressed data is determined based on the target data and the predicted data.

23. The method according to claim 21, wherein the compression mode of the target data is determined based on a range of a second difference, and the second difference is a difference between the target data and the predicted data.

24. The method according to claim 23, wherein the range of the second difference is determined based on a predicted difference threshold, and the predicted difference threshold is configured by the second device or agreed on in a protocol.

25. The method according to claim 23 or 24, wherein if the second difference is less than or equal to the predicted difference threshold corresponding to the target data, the compression result information is determined based on the predicted data, and the first compressed data is the second difference; and
if the second difference is greater than the predicted difference threshold, the compression result information is determined based on the first data, the first compressed data is the first difference, the compression result information comprises the indication information that indicates the first data, the first data is the data in the first data set corresponding to the target data, the first data set comprises the at least one piece of data, and the first difference is the difference between the target data and the first data.

26. The method according to claim 25, wherein the first data is data that is in all data in the first data set and that is closest to the target data.

27. The method according to claim 25 or 26, wherein the compression result information further comprises the first data; or
the compression result information further comprises the first data and information that indicates that the second data set is updated.

28. The method according to claim 25, wherein the first data set is a data set obtained after second data in a second data set corresponding to the target data is replaced with the first data, the difference between the target data and the first data is less than or equal to the predicted difference threshold, and a difference between the target data and the second data is greater than the predicted difference threshold.

29. The method according to claim 28, wherein the second data is data that is in the second data set and that is closest to the target data.

30. The method according to claim 28 or 29, wherein the first data is determined by the first device based on the target data, or the first data is determined by the first device based on the target data and the second data.

31. The method according to claim 20, 25, or 26, wherein the first data set is one of candidate data sets respectively corresponding to a plurality of groups, and the candidate data set is used to predict to-be-compressed data.

32. The method according to claim 31, wherein the method further comprises:
sending second information, wherein the second information indicates the plurality of groups and the candidate data sets respectively corresponding to the plurality of groups.

33. The method according to claim 32, wherein the first information further comprises indication information that indicates a candidate data set corresponding to a group, in the plurality of groups, in which the target data is located.

34. The method according to claim 32, wherein the method further comprises:
sending third information, wherein the third information indicates the plurality of groups.

35. The method according to claim 34, wherein the method further comprises:
receiving fourth information, wherein the fourth information indicates a candidate data set corresponding to each of the plurality of groups, and the candidate data set corresponding to each of the plurality of groups is determined by the first device based on the plurality of groups.

36. The method according to claim 31, wherein the method further comprises:
sending fifth information, wherein the fifth information indicates that the plurality of groups are determined by the first device, and the candidate data sets respectively corresponding to the plurality of groups are determined by the first device.

37. A communication apparatus, comprising a processor, wherein
the processor is configured to: be coupled to a memory, and after reading instructions in the memory, implement the data compression method according to any one of claims 1 to 18, or implement the data decompression method according to any one of claims 19 to 36.

38. A computer-readable storage medium, wherein the computer-readable storage medium comprises a computer program or instructions; and when the computer program or the instructions are run on a computer, the data compression method according to any one of claims 1 to 18 is implemented, or the data decompression method according to any one of claims 19 to 36 is implemented.

39. A computer program product, wherein the computer program product comprises a computer program or instructions; and when the computer program or the instructions are run on a computer, the data compression method according to any one of claims 1 to 18 is implemented, or the data decompression method according to any one of claims 19 to 36 is implemented.

40. A communication system, wherein the communication system comprises a first device and a second device, the first device is configured to implement the data compression method according to any one of claims 1 to 18, and the second device is configured to implement the data decompression method according to any one of claims 19 to 36.
